# EUROPÄISCHE PATENTSCHRIFT

(11) **EP 3 661 786 B1**
(45) Veröffentlichungstag und Bekanntmachung des Hinweises auf die Patenterteilung: **01.06.2022**
(21) Anmeldenummer: 18750135.8
(22) Anmeldetag: 31.07.2018
(51) Int. Cl.: B60K 6/48, B60K 6/365, B60K 6/547, F16H 3/72

(54) **GETRIEBE FÜR EINE HYBRIDANTRIEBSANORDNUNG, HYBRIDANTRIEBSANORDNUNG UND FAHRZEUG**
RANSMISSION FOR A HYBRID DRIVE ARRANGEMENT, HYBRID DRIVE ARRANGEMENT AND VEHICLE
BOÎTE DE VITESSES POUR UN SYSTÈME DE PROPULSION HYBRIDE, SYSTÈME DE PROPULSION HYBRIDE ET VÉHICULE

(30) Priorität: 02.08.2017 DE 102017213337
(43) Veröffentlichungstag der Anmeldung: 10.06.2020
(73) Patentinhaber: Robert Bosch GmbH, 70442 Stuttgart (DE)
(72) Erfinder: HUBER, Thomas, 74915 Daisbach (DE); ESZTERLE, Dominik, 74078 Heilbronn (DE); SMEJKAL, Tom, 01069 Dresden (DE); WIRTH, Christian, 85452 Eichenried (DE); DEMPEL, Rolf Lucius, 74354 Besigheim (DE); BRUMMER, Simon, 82194 Gröbenzell (DE)
(86) Internationale Anmeldenummer: PCT/EP2018/070666
(87) Internationale Veröffentlichungsnummer: WO 2019/025401

(56) Entgegenhaltungen:
- DE-A1-102014 112 198
- DE-A1-102015 226 292
- US-A1- 2006 189 428

## Beschreibung

Die Erfindung betrifft ein Getriebe für eine Hybridantriebsanordnung. Ferner betrifft die Erfindung eine Hybridantriebsanordnung mit einem Getriebe und ein Fahrzeug mit einer Hybridantriebsanordnung.

### Stand der Technik

Getriebe für Hybridantriebsanordnungen sind aus dem Stand der Technik bekannt. Beispielsweise zeigt die WO2010/009943 A1 ein Doppelkupplungsgetriebe, welches den Betrieb eines Hybridfahrzeugs verbrennungsmotorisch, elektromotorisch und mit beiden Antriebsaggregaten zusammen ermöglicht. Derartige Getriebe sind komplex, schwer und teuer. Es besteht Bedarf an Getriebetopologien mit reduzierter mechanischer Komplexität, verringertem Raumbedarf und verringertem Gewicht.

Der Begriff "gekoppelt" bzw. "angekoppelt" wird im Folgenden im Sinne einer festen Verbindung benutzt. Im Gegensatz dazu umfasst der Begriff "koppelbar" im Rahmen der vorliegenden Beschreibung sowohl feste als auch schaltbare Verbindungen. Ist konkret eine schaltbare Verbindung gemeint, wird in der Regel das entsprechende Schaltelement, insbesondere eine Bremse oder eine Kupplung, explizit angegeben. Ist hingegen konkret eine feste, starre oder drehfeste Verbindung gemeint, wird in der Regel der Begriff "gekoppelt" bzw. "angekoppelt" verwendet und auf die Verwendung des Begriffs "koppelbar" verzichtet. Die Verwendung des Begriffs "koppelbar" ohne Angabe eines konkreten Schaltelementes deutet somit auf den beabsichtigten Einschluss beider Fälle hin. Diese Unter-scheidung erfolgt allein zugunsten der besseren Verständlichkeit und insbesondere zur Verdeutlichung, wo das Vorsehen einer schaltbaren Verbindung anstelle einer in der Regel leichter realisierbaren festen Verbindung beziehungsweise Koppelung zwingend erforderlich ist. Die obige Definition des Begriffs "gekoppelt" bzw. "angekoppelt" ist daher keinesfalls so eng auszulegen, dass willkürlich zu Umgehungszwecken eingefügte Kupplungen aus seinem Wortsinn herausführten.

Aus der US 2006 / 0 189 428 A1 ist ein Getriebe für eine Hybridantriebsanordnung bekannt.

### Offenbarung der Erfindung

Es wird ein Getriebe für eine Hybridantriebsanordnung bereitgestellt, welches mit zwei Antriebsaggregaten koppelbar ist, mit einer Eingangswelle und einer Ausgangswelle, mindestens einem ersten, zweiten, dritten und vierten Schaltelement und mindestens einem ersten Planetengetriebe und einem zweiten Planetengetriebe wobei die Eingangswelle mittels dem ersten Schaltelement koppelbar ist mit dem Hohlrad des ersten Planetengetriebes und
die Ausgangswelle mit dem Planetenträger des ersten Planetengetriebes gekoppelt ist wobei der Planetenträger des ersten Planetengetriebes mittels dem zweiten Schaltelement koppelbar ist mit dem Hohlrad des zweiten Planetengetriebes und der Planetenträger des ersten Planetengetriebes mittels dem dritten Schaltelement koppelbar ist mit dem Sonnenrad des zweiten Planetengetriebes wobei das Sonnenrad des ersten Planetengetriebes mittels dem vierten Schaltelement koppelbar ist mit dem Sonnenrad des zweiten Planetengetriebes.

Es wird ein Getriebe für eine Hybridantriebsanordnung bereitgestellt. Für den Betrieb der Hybridantriebsanordnung sind zwei Antriebsaggregate an das Getriebe koppelbar. Das Getriebe umfasst eine Eingangswelle und eine Ausgangswelle, mindestens ein erstes, zweites, drittes und viertes Schaltelement und mindestens ein erstes und ein zweites Planetengetriebe. Die Ausgangswelle ist mit dem Planetenträger des ersten Planetengetriebes gekoppelt. Im Rahmen der Beschreibung ist eine Koppelung als eine Verbindung zu verstehen, welche starr, beispielsweise einstückig, beispielsweise mittels einer Welle, oder mit einer festen

Übersetzung oder Getriebestufe ausgeführt ist. Die Eingangswelle ist mittels dem ersten Schaltelement koppelbar mit dem Hohlrad des ersten Planetengetriebes. Der Planetenträger des ersten Planetengetriebes ist mittels dem zweiten Schaltelement koppelbar mit dem Hohlrad des zweiten Planetengetriebes. Weiter ist der Planetenträger des ersten Planetengetriebes mittels des dritten Schaltelementes koppelbar mit dem Sonnenrad des zweiten Planetengetriebes. Das Sonnenrad des ersten Planetengetriebes ist mittels dem vierten Schaltelement koppelbar mit dem Sonnenrad des zweiten Planetengetriebes. Insbesondere ist die Ausgangswelle mit einem Abtrieb koppelbar. Ein Abtrieb ist insbesondere mindestens eine Welle oder eine Achse, die die Bewegung der Ausgangswelle auf den mechanischen Antriebsstrang eines Fahrzeugs, beispielsweise auf ein Differenzial oder auf ein Antriebsrad überträgt. Vorteilhaft wird ein Getriebe bereitgestellt, welches die Drehzahl und das Drehmoment, welches an der Eingangswelle anliegt, bei geschlossenem erstem, zweitem, drittem und viertem Schaltelement entsprechend der Übersetzungsverhältnisse in dem Getriebe auf die Ausgangswelle überträgt. Bei geöffneten ersten Schaltelement ist die Eingangswelle von der Ausgangswelle abgekoppelt.

In einer anderen Ausgestaltung der Erfindung umfasst das Getriebe ein fünftes-Schaltelement, welches dazu eingerichtet ist, das Hohlrad des ersten Planetengetriebes mit einem Fixpunkt zu koppeln.

Für das Getriebe ist ein fünftes Schaltelement vorgesehen, welches ein Freigeben oder Festhalten des Hohlrades des ersten Planetengetriebes ermöglicht, insbesondere ein Verbinden des Hohlrades des ersten Planetengetriebes oder ein Abstützen des Hohlrades des ersten Planetengetriebes an einem Fixpunkt oder an einem Gehäuse des Getriebes. Das Festhalten des Hohlrades des ersten Planetengetriebes umfasst das feste, starre fixieren des stillstehenden Hohlrades des ersten Planetengetriebes. Das Freigeben des Hohlrades des ersten Planetengetriebes umfasst das Lösen der Fixierung, so dass das Hohlrades des ersten Planetengetriebes entsprechend der auf das Hohlrad wirkenden Kräfte beschleunigt. Vorteilhaft lassen sich mit der bisher beschriebenen Topologie des Getriebes mit den ersten bis fünften Schaltelementen, neben den bereits erwähnten, weitere Betriebsmodi einstellen. So ergibt sich bei geschlossenem fünften Schaltelement ein Blockieren der Eingangswelle, wenn das erste Schaltelement gleichzeitig geschlossen wird.

In einer anderen Ausgestaltung der Erfindung umfasst das Getriebe ein sechstes Schaltelement, welches dazu eingerichtet ist, das Hohlrad des zweiten Planetengetriebes mit einem Fixpunkt zu koppeln.

Für das Getriebe ist ein sechstes Schaltelement vorgesehen, welches ein Freigeben oder Festhalten des Hohlrades des zweiten Planetengetriebes ermöglicht, insbesondere ein Verbinden des Hohlrades des zweiten Planetengetriebes oder ein Abstützen des Hohlrades des zweiten Planetengetriebes an einem Fixpunkt oder an einem Gehäuse des Getriebes. Das Festhalten des Hohlrades des zweiten Planetengetriebes umfasst das feste, starre fixieren des stillstehenden Hohlrades des zweiten Planetengetriebes. Das Freigeben des Hohlrades des zweiten Planetengetriebes umfasst das Lösen der Fixierung, so dass das Hohlrades des zweiten Planetengetriebes entsprechend der auf das Hohlrad wirkenden Kräfte beschleunigt. Vorteilhaft lassen sich mit der bisher beschriebenen Topologie des Getriebes mit den ersten bis sechsten Schaltelementen, neben den bereits erwähnten, weitere Betriebsmodi einstellen. So blockiert bei geschlossenem sechsten Schaltelement das Hohlrad des zweiten Planetengetriebes.

In einer anderen Ausgestaltung der Erfindung umfasst das Getriebe ein siebtes-Schaltelement, welches dazu eingerichtet ist, die Eingangswelle mit dem Planetenträger des zweiten Planetengetriebes zu koppeln.

Für das Getriebe ist ein siebtes Schaltelement vorgesehen, welches ein Freigeben oder koppeln der Eingangswelle mit dem Planetenträger des zweiten Planetengetriebes ermöglicht. Das Koppeln der Eingangswelle mit dem Planetenträger des zweiten Planetengetriebes umfasst das drehfeste, starre Verbinden der Eingangswelle mit dem Planetenträger des zweiten Planetengetriebes. Das Freigeben der Eingangswelle mit dem Planetenträger des zweiten Planetengetriebes umfasst das Lösen der Verbindung, so dass die Eingangswelle oder der Planetenträger des zweiten Planetengetriebes entsprechend der auf die Eingangswelle oder den Planetenträger des zweiten Planetengetriebes wirkenden Kräfte beschleunigen. Vorteilhaft lassen sich mit der bisher beschriebenen Topologie des Getriebes mit den ersten bis siebten Schaltelementen, neben den bereits erwähnten, weitere Betriebsmodi einstellen. So ergeben sich je nach Kombination des Schließens und Öffnens der Schaltelemente fünf unterschiedliche Übersetzungsverhältnisse zwischen der Eingangswelle und der Ausgangswelle.

In einer anderen Ausgestaltung der Erfindung umfasst das erste, zweite, fünfte und/ oder das sechste Schaltelement eine Klauenkupplung.

Das erste, zweite, fünfte und/ oder das sechste Schaltelement ist als Klauenkupplung ausgeführt.

Das erste und fünfte oder das zweite und sechste Schaltelement sind entweder geöffnet oder wechselseitig geschlossen, also niemals gleichzeitig geschlossen. Daher können diese jeweils zwei Schaltelemente vorteilhaft jeweils mittels eines Aktuators und einer Schaltgabel oder Schaltschwinge angesteuert werden. Der Aktuator steuert hierzu insbesondere drei Positionen an: erstgenanntes Schaltelement geschlossen; beide Schaltelemente geöffnet; letztgenanntes Schaltelement geschlossen. Vorteilhaft wird eine Möglichkeit zur steuerbaren Kopplung der Komponenten des Getriebes bereitgestellt.

In einer weiteren Ausgestaltung der Erfindung umfasst das dritte, vierte und/ oder das siebte Schaltelement eine Kupplung, insbesondere eine Schlupfkupplung.

Zur Verbindung einzelner Komponenten des Getriebes sind das dritte, vierte und/ oder das siebte Schaltelement als Kupplung ausgeführt. Bei einer derartigen Kupplung kann es sich insbesondere um eine Trockenkupplung, Nasskupplung, Schlupfkupplung oder Klauenkupplung handeln. Vorteilhaft werden Möglichkeiten für eine steuerbare Verbindung der Komponenten des Getriebes bereitgestellt.

In einer anderen Ausgestaltung der Erfindung ist ein erstes Antriebsaggregat, insbesondere eine Verbrennungskraftmaschine, mit der Eingangswelle koppelbar und/ oder ein zweites Antriebsaggregat, insbesondere eine elektrische Maschine, mit dem Planetenträger des zweiten Planetengetriebes koppelbar.

An der Eingangswelle ist eingangsseitig das erste Antriebsaggregat ankoppelbar. Das zweite Antriebsaggregat ist mit dem Planetenträger des zweiten Planetengetriebes koppelbar. Vorteilhaft kann für einen generatorischen Betrieb des zweiten Antriebsaggregates, beispielsweise einer elektrischen Maschine, beispielsweise zum Laden einer Batterie, das erste Antriebsaggregat oder der Verbrennungsmotor mittels Schließen des siebten Schaltelements und Öffnen der anderen Schaltelemente mit der elektrischen Maschine verbunden werden. Da dabei beide Antriebsaggregate von der Ausgangswelle abgekoppelt sind und somit kein Drehmoment auf die Ausgangswelle übertragen wird, kann dieses Laden bei beispielsweise stillstehender Ausgangswelle, also beispielsweise während des Stillstands eines Fahrzeugs, erfolgen (Standladen). Bei beispielsweise stillstehender Ausgangswelle wird eine direkte Übertragung der rotatorischen Energie des ersten Antriebsaggregates zum zweiten Antriebsaggregat oder umgekehrt, beispielsweise zum Starten eines Verbrennungsmotors, ermöglicht.

Ein leistungsverzweigter Betrieb des Getriebes (eCVT-Modus) wird durch Schließen des ersten, vierten und sechsten Schaltelements und Öffnen des zweiten, dritten, fünften und siebten Schaltelements ermöglicht. Dabei wirken das erste Antriebsaggregat auf das erste Hohlrad des ersten Planetengetriebes und die elektrische Maschine auf den Planetenträger des zweiten Planetengetriebes. Dabei lässt sich das Übersetzungsverhältnis zwischen Eingangswelle und Ausgangswelle über einen weiten Bereich mittels Vorgabe einer Drehzahl oder eines Drehmomentes des zweiten Antriebaggregates kontinuierlich variieren. Vorteilhaft wird ein leistungsverzweigter Betrieb, oder auch eCVT1-Modus genannt, ermöglicht, bei dem sowohl die Vortriebsleistung an der Ausgangswelle, als auch die Ladeleistung für den generatorischen Betrieb der elektrischen Maschine unabhängig voneinander einstellbar sind. Vorteilhaft wird ein Laden im Stand oder im Kriechen (≥0km/h bis ca. 10km/h) und ein sanfter komfortabler Übergang vom Modus Standladen in den Modus Kriechladen und den Modus Fahren mit fester Übersetzung, bzw. im festem Gang ermöglicht.

Bei geöffnetem erstem und siebtem Schaltelement ist das zweite Antriebsaggregat jeweils über einen der vier möglichen festen Übersetzungen mit der Ausgangsswelle verbunden, so dass ein Antreiben der Ausgangswelle nur mittels des zweiten Antriebsaggregates mit einer der vier festen Übersetzungen erfolgt. Mittels, insbesondere dosiertem, Schließen des siebten Schaltelements kann aus dem Fahren mittels dem zweiten Antriebsaggregat das erste Antriebsaggregat angetrieben und beispielsweise gestartet werden, falls das erste Antriebsaggregat ein Verbrennungsmotor ist.

Es besteht auch die Möglichkeit, dass das erste Antriebsaggregat beispielsweise als elektrische Maschine ausgestaltet ist und das zweite Antriebsaggregat beispielsweise als Verbrennungskraftmaschine ausgestaltet ist. In einer solchen Konfiguration können sich mittels des Getriebes andere Funktionalitäten und Betriebsmodi für das Zusammenwirken der Komponenten ergeben, die hier nicht weiter ausgeführt werden.

In einer anderen Ausgestaltung der Erfindung erfolgt das Ändern der Übersetzungsverhältnisse des Getriebes zugkraftunterbrechungsfrei.

Ein Ändern der Übersetzungsverhältnisse des Getriebes, insbesondere ein Schalten in einen anderen Gang oder in einen anderen Betriebsmodus des Getriebes erfolgt zugkraftunterbrechungsfrei, wenn insbesondere für den Wechsel aus einem Betriebsmodus des Getriebes in einen anderen eines der Schaltelement seinen Zustand beibehält, ein zweites der Schaltelemente aus einem geschlossenen Zustand in einen geöffneten Zustand überführt wird und ein drittes der Schaltelemente aus einem geöffneten in einen geschlossenen Zustand überführt wird. Vorteilhaft wird ein Getriebe bereitgestellt, bei dem das Wechseln der Gangstufen ohne eine Unterbrechung der Zugkraft ermöglicht wird.

In einer anderen Ausgestaltung der Erfindung umfasst das Getriebe eine Ansteuerung zur Ansteuerung mindestens eines der Schaltelemente in Abhängigkeit eines vorgegebenen Betriebsvorgabesignals.

Es ist eine Ansteuerung vorgesehen welche in Abhängigkeit eines vorgegebenen Betriebsvorgabesignals, beispielsweise ein angefordertes Drehmoment, eine vorgegebene Drehzahl, oder ein bestimmter Betriebspunkt der Antriebsaggregate, mindestens eines der Schaltelemente ansteuert. Die genannten Parameter des Betriebsvorgabesignals können auf die Ausgangswelle des Getriebes, auf die Eingangswelle oder auf die mit den Antriebsaggregaten zu verbindenden Wellen bezogen sein. Vorteilhaft wird eine Steuerung des Getriebes ermöglicht.

Ferner betrifft die Erfindung eine Hybrid-Antriebsanordnung mit einem Getriebe, wobei die Hybridantriebsanordnung ein zweites Antriebsaggregat und/ oder einen Pulswechselrichter, elektrische Energiequelle oder ein erstes Antriebsaggregat umfasst.

Es wird eine Hybridantriebsanordnung mit einem bisher beschriebenen Getriebe bereitgestellt. Die Hybridantriebsanordnung umfasst ein zweites Antriebsaggregat. Insbesondere umfasst die Hybridantriebsanordnung einen Pulswechselrichter, eine elektrische Energiequelle und oder ein erstes Antriebsaggregat. Das zweite Antriebsaggregat ist insbesondere mit dem Planetenträger des zweiten Planetengetriebes gekoppelt oder verbunden. Der Pulswechselrichter ist insbesondere zur Versorgung des zweiten Antriebsaggregates, insbesondere einer elektrischen Maschine, vorgesehen. Hierzu wandelt er insbesondere die elektrische Energie einer elektrischen Energiequelle, beispielsweise einer Batterie und/ oder einer Brennstoffzelle um. Das erste Antriebsaggregat ist insbesondere mit der Eingangswelle gekoppelt oder verbunden. Vorteilhaft wird eine Hybridantriebsanordnung, welche für den Einsatz in einem Fahrzeug eingerichtet ist, bereitgestellt.

Ferner umfasst die Erfindung ein Fahrzeug mit einer beschriebenen Hybridantriebsanordnung. Vorteilhaft wird ein Fahrzeug bereitgestellt, welches eine Hybridantriebsanordnung umfasst.

Außerhalb des in den Ansprüchen definierten Umfangs der Erfindung wird ferner ein Verfahren zum Betrieb einer Hybridantriebsanordnung mit einem Getriebe beschrieben.

Das Verfahren umfasst folgende Schritte:
Ermitteln eines Betriebsvorgabesignals;
Ansteuern mindestens eines der Schaltelemente zur Einstellung der Funktionalität des Getriebes in Abhängigkeit des Betriebsvorgabesignals (BV).

Es wird ein Verfahren zum Betrieb einer Hybridantriebsanordnung mit einem Getriebe bereitgestellt. Dabei wird ein Betriebsvorgabesignal ermittelt. Mindestens eines der Schaltelemente wird zur Einstellung der Funktionalität des Getriebes oder eines entsprechenden Betriebsmodus in Abhängigkeit des Betriebsvorgabesignals geschlossen oder geöffnet. Das Betriebsvorgabesignal wird in Abhängigkeit einer Betriebsstrategie, eines Fahrerwunsches oder Fahrpedals, eines Batteriemanagementsystems oder anderer beispielsweise in einem Fahrzeug verfügbaren Systemen vorgegeben. In Abhängigkeit dieses Betriebsvorgabesignals werden die Schaltelemente zur Einstellung der entsprechenden Funktionalität oder des Betriebsmodus des Getriebes angesteuert, insbesondere die Kupplungen oder Bremsen geschlossen oder geöffnet. Die Funktionalität des Getriebes oder der Betriebsmodus sind insbesondere die unterschiedlichen Übersetzungsverhältnisse der verschiedenen Gangstufen, oder die verschiedenen Modi oder Betriebsmodi, beispielsweise ein generatorischer Betrieb des zweiten Antriebsaggregates bei stillstehender Ausgangswelle oder der eCVT-Modus. Vorteilhaft wird ein Verfahren für den Betrieb der Hybridantriebsanordnung bereitgestellt.

Es versteht sich, dass die Merkmale, Eigenschaften und Vorteile des Getriebes entsprechend auf die Hybridantriebsanordnung und auf das Fahrzeug zutreffen bzw. anwendbar sind. Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Im Folgenden soll die Erfindung anhand einiger Figuren näher erläutert werden, dazu zeigen:
Figur 1: eine schematische Darstellung der Hybridantriebsstranganordnung mit einem Getriebe.
Figur 2: eine Schaltmatrix des Getriebes.
Figur 3: ein schematisch dargestelltes Fahrzeug mit einer Hybridantriebstranganordnung.
Figur 4: ein schematisch dargestelltes Verfahren zum Betrieb einer Hybridantriebstranganordnung.

### Ausführungsformen der Erfindung

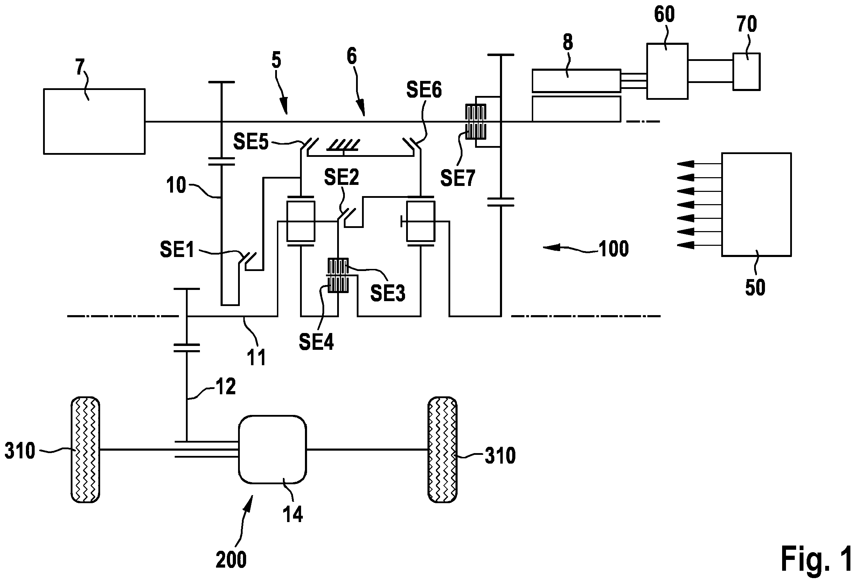

Die Figur 1 zeigt eine Hybridantriebstranganordnung 200 mit einem ersten Antriebsaggregat 7, insbesondere einem Verbrennungsmotor, und einem zweiten Antriebsaggregat 8, insbesondere einer elektrischen Maschine, und einem Getriebe 100. Insbesondere umfasst die Hybridantriebstranganordnung einen Pulswechselrichter 60 zur Versorgung des zweiten Antriebsaggregates 8 mit elektrischer Energie. Weiter umfasst die Hybridantriebstranganordnung 200 insbesondere eine elektrische Energiequelle 70, welche mit dem Pulswechselrichter 60 verbunden ist. Das Getriebe 100 umfasst die Eingangswelle 10 und die Ausgangswelle 11. Weiter umfasst das Getriebe 100 ein erstes Planetengetriebe 5 und ein zweites Planetengetriebe 6. Weiter umfasst das Getriebe 100 sieben Schaltelemente SE1..SE7. Das erste Schaltelement SE1, insbesondere eine Klauenkupplung, ist dazu eingerichtet, die Eingangswelle 10 mit dem Hohlrad des ersten Planetengetriebes 5 zu verbinden oder zu trennen. Das zweite Schaltelement SE2, insbesondere eine Klauenkupplung, ist dazu eingerichtet, den Planetenträger des ersten Planetengetriebes 5 mit dem Hohlrad des zweiten Planetengetriebes 6 zu verbinden oder zu trennen. Das dritte Schaltelement SE3, insbesondere eine Kupplung, ist dazu eingerichtet, den Planetenträger des ersten Planetengetriebes 5 mit dem Sonnenrad des zweiten Planetengetriebes 6 zu verbinden oder zu trennen. Das vierte Schaltelement SE4, insbesondere eine Kupplung, ist dazu eingerichtet, das Sonnenrad des ersten Planetengetriebes 5 mit dem Sonnenrad des zweiten Planetengetriebes 6 zu verbinden oder zu trennen. Das fünfte Schaltelement SE5, insbesondere eine Klauenkupplung, ist dazu eingerichtet, das Hohlrad des ersten Planetengetriebes 5 mit einem Fixpunkt zu verbinden oder zu trennen. Das sechste Schaltelement SE6, insbesondere eine Klauenkupplung, ist dazu eingerichtet, das Hohlrad des zweiten Planetengetriebes 6 mit einem Fixpunkt zu verbinden oder zu trennen. Weiter kann das Getriebe 100 ein siebtes Schaltelement SE7 aufweisen. Das siebte Schaltelement SE7, insbesondere eine Kupplung, ist dazu eingerichtet, die Eingangswelle 10 mit dem Planetenträger des zweiten Planetengetriebes 6 zu verbinden oder zu trennen. Das Getriebe ist weiter dazu eingerichtet, für den Betrieb mit einem ersten Antriebsaggregat 7 über die Eingangswelle 10 gekoppelt oder verbunden zu werden. In der Figur 1 ist dazu dargestellt, dass die Welle des Antriebsaggregates 7 mit der Eingangswelle 10, insbesondere über einen ersten Stirnradsatz, verbunden wird. Das zweite Antriebsaggregat 8, insbesondere eine elektrische Maschine, wird für den Betrieb des Getriebes 100 wie in der Figur 1 dargestellt mit dem Planetenträger des zweiten Planetengetriebes 6, insbesondere über einen zweiten Stirnradsatz 12, verbunden. Somit ist das siebte Schaltelement SE7 dazu eingerichtet, das mit der Eingangswelle 10 verbundene erste Antriebsaggregat 7 mit dem Planetenträger des zweiten Planetengetriebes 6 und mit dem zweiten Antriebsaggregat 8 zu verbinden oder zu trennen. Für eine Optimierung der Übersetzungsverhältnisse ist die Ausgangswelle 11 beispielsweise über einen Abtrieb 12, insbesondere einen Stirnradsatz, beispielsweise mit einem Differential 14 verbunden, über welches die Bewegungen auf die Räder 310 übertragen werden. Für die Ansteuerung der Schaltelemente ist eine Ansteuerung 50 vorgesehen, die das Verfahren zum Betrieb der Hybridantriebsanordnung mit dem Getriebe ausführt. Die Steuerleitungen zwischen der Ansteuerung 50 und den einzelnen Schaltelementen SE1..SE7 sind aus Übersichtlichkeitsgründen nur als Pfeil angedeutet und nicht vollständig dargestellt. Die Kommunikation zwischen den Schaltelementen SE1..SE7 und der Vorrichtung kann mittels der Steuerleitungen als auch mittels eines BUS-Systems oder kabellos erfolgen.

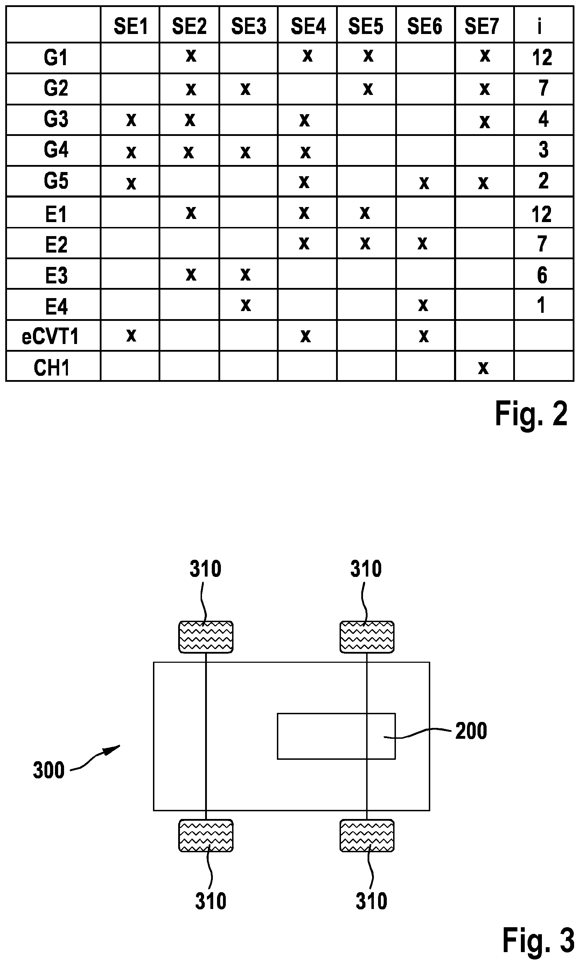

Figur 2 zeigt eine Schaltmatrix des Getriebes. In den Spalten sind die einzelnen Schaltelemente SE1..SE7 angegeben und in der letzten Spalte beispielhaft ein sich zwischen einem der Antriebsaggregate und der Ausgangswelle ergebendes ungefähres Übersetzungsverhältnis. In den Zeilen sind die unterschiedlichen Gangstufen, Gänge oder Betriebsmodi des Getriebes angegeben. Mittels Kreuzen ist in der Schaltmatrix dargestellt, welches der Schaltelemente aktiviert sein muss, damit sich der entsprechende Gang oder Betriebsmodus einstellt. Mit Aktivierung der Schaltelemente ist hierbei insbesondere gemeint, dass eine Kupplung geschlossen wird oder eine Bremse betätigt wird, sodass über die Kupplung eine Kraft von einer Welle auf eine weitere Welle übertragen wird oder mittels der Bremse eine Kraft auf einen Fixpunkt, insbesondere das Getriebegehäuse, übertragen wird. Aus der Schaltmatrix ist ersichtlich, dass sich je nach Kombination der vier Schaltelemente fünf Gänge G1.....G5 einstellen lassen, wobei der erste Gang G1 das höchste Übersetzungsverhältnis und der fünfte Gang G5 das niedrigste Übersetzungsverhältnis aufweist. Bei den Gängen G1..G5 liegt bevorzugt jeweils zwischen dem erstem Antriebsaggregat 7 und der Ausgangswelle 11 ein festes Drehzahlverhältnis entsprechend der in der letzten Spalte angegebenen Übersetzung an. Die Ausgangswelle wird in den Gängen G1..G5 entweder von dem ersten Antriebsaggregat 7 alleine oder mit dem zweiten Antriebsaggregat 8 zusammen angetrieben. Insbesondere sind dies verbrennungsmotorische oder hybridische Gänge, beispielsweise wenn das erste Antriebsaggregat 7 ein Verbrennungsmotor ist und das zweite Antriebsaggregat 8 eine elektrische Maschine. Diese Gänge ermöglichen auch eine Lastpunktanhebung des Verbrennungsmotors, so dass die elektrische Maschine generatorisch betrieben werden kann und ein Laden einer Batterie während des Betriebs, insbesondere Fahrbetrieb eines Fahrzeugs, erfolgen kann. In den folgenden Zeilen der Matrix schlie-ßen sich die Gänge E1 bis E4 oder Betriebsmodi an, in denen nur das zweite Antriebsaggregat 8 mit der Ausgangswelle 11 verbunden ist. Hierzu muss inbesondere das siebte Schaltelement SE7 geöffnet sein, damit keine Verbindung zum ersten Antriebsaggregat 7 besteht. Es ergeben sich insbesondere elektromotorische Gänge, beispielsweise wenn das zweite Antriebsaggregat eine elektrische Maschine ist. Vorteilhaft kann in diesen Gängen ein Fahrzeug lokal emissionsfrei betrieben werden. Beispielhaft ergeben sich die in der Schaltmatrix angegebenen Übersetzungen zwischen dem zweiten Antriebsaggregat 8 und der Abtriebswelle 11.

Mittels Schließens des ersten, vierten und sechsten Schaltelementes SE1, SE4, SE6 und Öffnen der verbleibenden Schaltelemente SE2, SE3, SE5, SE7 ergibt sich ein leistungsverzweigter Betrieb, der eCVT1-Modus, welcher eine voneinander unabhängige Vortriebsleistung an der Ausgangswelle 11 und Ladeleistung des zweiten Antriebsaggregates 8 ermöglicht. Insbesondere eignet sich dieser Betriebsmodus zum hybridischen Anfahren bei niedrigem Batterieladezustand, da ein stufenloses Verändern der Übersetzungsverhältnisse und damit insbesondere stufenloses Beschleunigen bei gleichzeitigem generatorischen Betrieb des zweiten Antriebsaggregates 8 möglich ist.

Ein weiterer Modus CH1, oder auch Standladen, genannt, ergibt sich, wenn nur das siebte Schaltelement SE 7 geschlossen ist und die verbleibenden Schaltelemente SE1..SE6 geöffnet sind. Die Antriebsaggregate 7 und 8 werden dabei miteinander gekoppelt, wobei keine Verbindung zur Ausgangswelle 11 besteht. In diesem Betriebsmodus kann während des Stillstands der Ausgangswelle, insbesondere eines Fahrzeugs, mittels des ersten Antriebsaggregates 7 das zweite 8 angetrieben werden, beispielsweise generatorisch zum Laden einer elektrischen Energiequelle 70, insbesondere einer Batterie, verwendet werden. Alternativ kann mittels des zweiten Antriebsaggregates 8 auch das erste 7 angetrieben werden und beispielsweise ein Verbrennungsmotorstart oder eine Diagnose des Verbrennungsmotors durchgeführt werden, falls das erste Antriebsaggregat 7 ein Verbrennungsmotor ist und das zweite Antriebsaggregat 8 eine elektrische Maschine ist.

Figur 3 zeigt ein Fahrzeug 300 mit Rädern 310, wobei das Fahrzeug eine Hybridantriebsanordnung 200, wie oben beschrieben, umfasst.

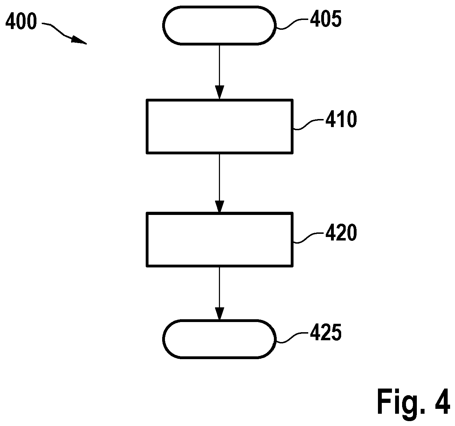

Figur 4 zeigt ein Ablaufdiagramm eines Verfahrens 400 zum Betrieb einer Hybridantriebsanordnung 200 mit einem Getriebe 100. Mit Schritt 405 startet das Verfahren. In Schritt 410 wird ein Betriebsvorgabesignal BV ermittelt und in Schritt 420 mindestens eines der Schaltelemente SE1....SE7 zur Einstellung der Funktionalität des Getriebes 100 in Abhängigkeit des Betriebsvorgabesignals BV angesteuert. Mit Schritt 425 endet das Verfahren. Das Betriebsvorgabesignal BV ist hierbei entweder ein Parameter für eine physikalische Größe im Getriebe 100 wie z.B. ein Drehmoment oder eine Drehzahl oder eine zu übertragende Leistung, welche an einer Komponente des Getriebes 100 anliegen oder übertragen werden soll. Diese Komponenten sind insbesondere die Eingangswelle 10, die Ausgangswelle 11 aber auch die Parameter an den Antriebsaggregaten 7, 8 oder den Schaltelementen SE1..SE7. Darüber hinaus kann das Betriebsvorgabesignal BV auch einen bestimmten Betriebsmodus wie einen der fünf Gänge G1.....G5 oder der vier Gänge E1..E4, welche nur mit dem zweiten Antriebsaggregat betrieben werden, oder auch die besonderen Funktionen eCVTl oder Standladen CH1 darstellen. In Abhängigkeit dieses Betriebsvorgabesignals BV werden die Schaltelemente SE1 bis SE7 entsprechend der Schaltmatrix angesteuert, um das Getriebe 100 in den entsprechenden Gang oder Betriebsmodus zu schalten. Für eine zugkraftunterbrechungsfreie Umschaltung zwischen den einzelnen Gängen oder Betriebsmodi ist es notwendig, dass eines der Schaltelemente SE1....SE7 seinen Zustand vor und nach der Schaltung beibehält, wobei ein weiteres Schaltelement während des Schaltens aus dem geöffneten in den geschlossenen Zustand übergeht, während ein anderes aus dem geschlossenen in den geöffneten Zustand übergeht.

## Patentansprüche

1. Getriebe (100) für eine Hybridantriebsanordnung,
welches mit zwei Antriebsaggregaten (7, 8) koppelbar ist,
mit
einer Eingangswelle (10) und einer Ausgangswelle (11),
mindestens einem ersten, zweiten, dritten und vierten Schaltelement (SE1, SE2, SE3, SE4),
und mindestens einem ersten Planetengetriebe (5) und einem zweiten Planetengetriebe (6),
wobei
die Eingangswelle (10) mittels dem ersten Schaltelement (SE1) koppelbar ist mit einem Hohlrad des ersten Planetengetriebes (5) und
die Ausgangswelle (11) mit einem Planetenträger des ersten Planetengetriebes (5) gekoppelt ist
wobei ein Sonnenrad des ersten Planetengetriebes (5) mittels dem vierten Schaltelement (SE4) koppelbar ist mit einem Sonnenrad des zweiten Planetengetriebes (6),
**dadurch gekennzeichnet, dass**
der Planetenträger des ersten Planetengetriebes (5) mittels dem zweiten Schaltelement (SE2) koppelbar ist mit einem Hohlrad des zweiten Planetengetriebes (6) und der Planetenträger des ersten Planetengetriebes (5) mittels dem dritten Schaltelement (SE3) koppelbar ist mit dem Sonnenrad des zweiten Planetengetriebes (6).

2. Getriebe nach Anspruch 1, mit einem fünften Schaltelement (SE5), welches dazu eingerichtet ist, das Hohlrad des ersten Planetengetriebes (5) mit einem Fixpunkt zu koppeln.

3. Getriebe nach Anspruch 1, mit einem sechsten Schaltelement (SE6), welches dazu eingerichtet ist, das Hohlrad des zweiten Planetengetriebes (6) mit einem Fixpunkt zu koppeln.

4. Getriebe nach Anspruch 1
mit einem siebten Schaltelement (SE7), wobei die Eingangswelle (10) mittels dem siebten Schaltelement (SE7) koppelbar ist mit einem Planetenträger des zweiten Planetengetriebes (6).

5. Getriebe nach einem der vorhergehenden Ansprüche, wobei das erste und/oder zweite Schaltelement (SE1, SE2) eine Klauenkupplung umfasst.

6. Getriebe nach einem der vorhergehenden Ansprüche und nach Anspruch 2, wobei das fünfte Schaltelement (SE5) eine Klauenkupplung umfasst.

7. Getriebe nach einem der vorhergehenden Ansprüche und nach Anspruch 3, wobei das sechste Schaltelement (SE6) eine Klauenkupplung umfasst.

8. Getriebe nach einem der vorhergehenden Ansprüche,
wobei das dritte und/oder vierte Schaltelement (SE3, SE4) eine Kupplung, insbesondere eine Schlupfkupplung, umfasst.

9. Getriebe nach einem der vorhergehenden Ansprüche und nach Anspruch 4, wobei das siebte Schaltelement (SE7) eine Kupplung, insbesondere eine Schlupfkupplung, umfasst.

10. Getriebe nach einem der vorhergehenden Ansprüche,
wobei ein erstes Antriebsaggregat (7), insbesondere eine Verbrennungskraftmaschine, mit der Eingangswelle (10) koppelbar ist und/ oder ein zweites Antriebsaggregat (8), insbesondere eine elektrische Maschine, mit dem Planetenträger des zweiten Planetengetriebes (6) koppelbar ist.

11. Getriebe nach einem der vorhergehenden Ansprüche,
wobei ein Ändern der Übersetzungsverhältnisse des Getriebes (100) zugkraftunterbrechungsfrei erfolgt.

12. Getriebe nach einem der vorhergehenden Ansprüche,
mit einer Ansteuerung (50) zur Ansteuerung mindestens eines der Schaltelemente (SE1..SE7) in Abhängigkeit eines vorgegebenen Betriebsvorgabesignals (BV).

13. Hybridantriebsanordnung (200) mit einem Getriebe (100) nach einem der Ansprüche 1 bis 12, wobei die Hybridantriebsanordnung ein zweites Antriebsaggregat (8) und/ oder einen Pulswechselrichter (60), eine elektrische Energiequelle (70) oder ein erstes Antriebsaggregat (7) umfasst.

14. Fahrzeug (300) mit einer Hybridantriebsanordnung (200) nach Anspruch 13.

## Claims

1. Transmission (100) for a hybrid drive arrangement, which transmission (100) can be coupled to two drive units (7, 8),
with
an input shaft (10) and an output shaft (11),
at least one first, second, third and fourth shifting element (SE1, SE2, SE3, SE4),
and at least one first planetary transmission (5) and one second planetary transmission (6),
it being possible for the input shaft (10) to be coupled by means of the first shifting element (SE1) to an internal gear of the first planetary transmission (5), and the output shaft (11) being coupled to a planetary carrier of the first planetary transmission (5),
it being possible for a sun gear of the first planetary transmission (5) to be coupled by means of the fourth shifting element (SE4) to a sun gear of the second planetary transmission (6),
**characterized in that**
the planetary carrier of the first planetary transmission (5) can be coupled by means of the second shifting element (SE2) to an internal gear of the second planetary transmission (6), and the planetary carrier of the first planetary transmission (5) can be coupled by means of the third shifting element (SE3) to the sun gear of the second planetary transmission (6).

2. Transmission according to Claim 1,
with a fifth shifting element (SE5) which is configured to couple the internal gear of the first planetary transmission (5) to a fixed point.

3. Transmission according to Claim 1,
with a sixth shifting element (SE6) which is configured to couple the internal gear of the second planetary transmission (6) to a fixed point.

4. Transmission according to Claim 1,
with a seventh shifting element (SE7), it being possible for the input shaft (10) to be coupled by means of the seventh shifting element (SE7) to a planetary carrier of the second planetary transmission (6).

5. Transmission according to one of the preceding claims, the first and/or second shifting element (SE1, SE2) comprising a claw coupling.

6. Transmission according to one of the preceding claims and according to Claim 2, the fifth shifting element (SE5) comprising a claw coupling.

7. Transmission according to one of the preceding claims and according to Claim 3, the sixth shifting element (SE6) comprising a claw coupling.

8. Transmission according to one of the preceding claims,
the third and/or fourth shifting element (SE3, SE4) comprising a clutch, in particular a slipping clutch.

9. Transmission according to one of the preceding claims and according to Claim 4,
the seventh shifting element (SE7) comprising a clutch, in particular a slipping clutch.

10. Transmission according to one of the preceding claims,
it being possible for a first drive unit (7), in particular an internal combustion engine, to be coupled to the input shaft (10), and/or it being possible for a second drive unit (8), in particular an electric machine, to be coupled to the planetary carrier of the second planetary transmission (6).

11. Transmission according to one of the preceding claims,
a change in the transmission ratios of the transmission (100) taking place without an interruption in the tractive power.

12. Transmission according to one of the preceding claims,
with an actuation means (50) for actuating at least one of the shifting elements (SE1...SE7) in a manner which is dependent on a predefined operating specification signal (BV) .

13. Hybrid drive arrangement (200) with a transmission (100) according to one of Claims 1 to 12, the hybrid drive arrangement comprising a second drive unit (8) and/or a pulse inverter (60), an electric energy source (70) or a first drive unit (7).

14. Vehicle (300) with a hybrid drive arrangement (200) according to Claim 13.

## Revendications

1. Transmission (100) pour un agencement d'entraînement hybride,
qui peut être accouplée à deux ensembles d'entraînement (7, 8),
comprenant
un arbre d'entrée (10) et un arbre de sortie (11),
au moins un premier, deuxième, troisième et quatrième élément de commutation (SE1, SE2, SE3, SE4),
et au moins un premier engrenage planétaire (5) et un deuxième engrenage planétaire (6),
l'arbre d'entrée (10) pouvant être accouplé au moyen du premier élément de commutation (SE1) à une couronne du premier engrenage planétaire (5) et
l'arbre de sortie (11) étant accouplé à un porte-satellites du premier engrenage planétaire (5),
une roue solaire du premier engrenage planétaire (5) pouvant être accouplée au moyen du quatrième élément de commutation (SE4) à une roue solaire du deuxième engrenage planétaire (6),
**caractérisée en ce que**
le porte-satellites du premier engrenage planétaire (5) peut être accouplé à une couronne du deuxième engrenage planétaire (6) au moyen du deuxième élément de commutation (SE2) et le porte-satellites du premier engrenage planétaire (5) peut être accouplé à la roue solaire du deuxième engrenage planétaire (6) au moyen du troisième élément de commutation (SE3).

2. Transmission selon la revendication 1,
comprenant un cinquième élément de commutation (SE5), qui est conçu pour accoupler la couronne du premier engrenage planétaire (5) à un point fixe.

3. Transmission selon la revendication 1,
comprenant un sixième élément de commutation (SE6), qui est conçu pour accoupler la couronne du deuxième engrenage planétaire (6) à un point fixe.

4. Transmission selon la revendication 1,
comprenant un septième élément de commutation (SE7), l'arbre d'entrée (10) pouvant être accouplé à un porte-satellites du deuxième engrenage planétaire (6) au moyen du septième élément de commutation (SE7).

5. Transmission selon l'une quelconque des revendications précédentes, dans laquelle le premier et/ou le deuxième élément de commutation (SE1, SE2) comprennent un embrayage à crabots.

6. Transmission selon l'une quelconque des revendications précédentes et selon la revendication 2, dans laquelle le cinquième élément de commutation (SE5) comprend un embrayage à crabots.

7. Transmission selon l'une quelconque des revendications précédentes et selon la revendication 3, dans laquelle le sixième élément de commutation (SE6) comprend un embrayage à crabots.

8. Transmission selon l'une quelconque des revendications précédentes, dans laquelle le troisième et/ou le quatrième élément de commutation (SE3, SE4) comprend un embrayage, notamment un embrayage à glissement.

9. Transmission selon l'une quelconque des revendications précédentes et selon la revendication 4, dans laquelle le septième élément de commutation (SE7) comprend un embrayage, notamment un embrayage à glissement.

10. Transmission selon l'une quelconque des revendications précédentes, dans laquelle un premier ensemble d'entraînement (7), notamment un moteur à combustion interne, peut être accouplé à l'arbre d'entrée (10) et/ou un deuxième ensemble d'entraînement (8), notamment un moteur électrique, peut être accouplé au porte-satellites du deuxième engrenage planétaire (6).

11. Transmission selon l'une quelconque des revendications précédentes, dans laquelle une modification des rapports de transmission de la transmission (100) s'effectue sans interruption de la force de traction.

12. Transmission selon l'une quelconque des revendications précédentes,
comprenant une commande (50) pour commander au moins l'un des éléments de commutation (SE1...SE7) en fonction d'un signal de consigne de fonctionnement prédéterminé (BV).

13. Agencement d'entraînement hybride (200) comprenant une transmission (100) selon l'une quelconque des revendications 1 à 12, l'agencement d'entraînement hybride comprenant un deuxième ensemble d'entraînement (8) et/ou un onduleur à impulsions (60), une source d'énergie électrique (70) ou un premier ensemble d'entraînement (7).

14. Véhicule (300) comprenant un agencement d'entraînement hybride (200) selon la revendication 13.
